# EUROPEAN PATENT SPECIFICATION

(11) **EP 0 382 204 B1**
(45) Date of publication and mention of the grant of the patent: **21.12.1994**
(21) Application number: 90102471.1
(22) Date of filing: 08.02.1990
(51) Int. Cl.: G11B 11/10

(54) **Magneto-optical recording medium**
Magneto-optisches Aufzeichnungsmaterial
Matériel pour l'enregistrement magnéto-optique

(30) Priority: 10.02.1989 JP 32116/89
(43) Date of publication of application: 16.08.1990
(73) Proprietor: MITSUBISHI DENKI KABUSHIKI KAISHA, Tokyo (JP)
(72) Inventor: Tsutsumi, Kazuhiko, c/o Zairyo Kenkyusho, 8-Chome, Amagasaki-shi, Hyogo-ken (JP); Fukami, Tatsuya, c/o Zairyo Kenkyusho, 8-Chome, Amagasaki-shi, Hyogo-ken (JP)
(74) Representative: von Kreisler, Alek, Dipl.-Chem.

(56) References cited:
- EP-A- 0 139 474
- EP-A- 0 161 807
- EP-A- 0 279 581
- GB-A- 2 136 647
- IEEE Translation Journal on Magnetics in Japan vol. 3, no. 6, June 1988, New York, US, pages 491-492; Kobayashi et al.: "Write-Read Characteristics of Bi-Substituted Garnet Magneto-optical Disk"
- IEEE Translation Journal on Magnetics in Japan vol. 3, no. 6, June 1988, NewYork, US pages 487 - 488; Hayakawa et al.: "Effects of Annealing Atmosphere onMagnetooptical properties of Sputtered Bi-Substituted Garnet Films"

## Description

The present invention relates to a magneto-optical recording medium in which information can be overwritten by a magnetic field modulation method.

Various proposals have been made to overwrite information onto a magneto-optical recording medium (hereinafter referred to as a recording medium) by the magnetic field modulation method. In overwriting information by the magnetic field modulation method, a laser beam of constant light intensity is projected to the recording medium thereby to apply a modulated magnetic field of a predetermined intensity to the projected position of the recording medium, whereby the information already recorded in the recording medium is erased and at the same time fresh information is stored therein. The result of a research of the magneto-optical recording by the magnetic field modulation method mentioned above has been disclosed, for example, in "Magnetics Research MAG-87-173-180", published by a corporate juridical person: Japanese Electrotechnical Committee in November 24, 1987.

Meanwhile, in order to write information into the recording medium with high density, it is necessary to raise the modulation frequency of a magnetic head applying the modulated magnetic field. Besides, it is also required to elongate the distance between the magnetic head and the recording medium in view of the irregularity in the warping and thickness of the recording medium.

If the modulation frequency is raised, however, the intensity of the magnetic field generated by the magnetic head is reduced. Moreover, because of the high speed rotation of the recording medium, the intensity of the modulated magnetic field applied to the recording medium is unable to keep up with that of the modulated magnetic field of the magnetic head, which results in the deterioration of the intensity of the modulated magnetic field applied to the recording medium. The intensity of the modulated magnetic field applied to the recording medium is further deteriorated also subsequent to the elongated distance between the magnetic head and the recording medium.

Accordingly, it is required to make the intensity of the modulated magnetic field of the magnetic head not less than 2 x 10⁵/4 π A/m (200 Oe) for the purpose of recording information in the recording medium in a sufficient recording state. The reason for this is considered to reside in the fact that the floating magnetic field generated from the recording medium itself opposes or repels the modulated magnetic field applied from the magnetic head.

GB-2 136 647 A discloses a magneto-optical recording medium comprising a transparent substrate, an anisotropic magnetic film layer formed on the substrate and magnetized in a direction substantially perpendicular to the plane of the substrate, which magnetic film layer comprises a ferromagnetic oxide of the formula: MeGaₓFe₁₂₋ₓO₁₉ (in which Me represents an element selected from Ba, Sr and Pb, and x is an integer of from 3 to 8); and a reflective layer 3 formed on the anisotropic film layer. From the specification specific values for the multiplication t x Mₛ can be found.

GB-2 136 647 A discloses values for (t, Ms) being (0.01, 100), (70, 0.01), (60, 0.01), (50, 0.01) and (30, 0.1).

The present invention is intended to solve the above-described problems inherent in the prior arts, the principle of which will be discussed hereinbelow.

The inventors of the present invention have confirmed by experiments the influences of the floating magnetic field generated from the recording medium itself, with holding the intensity of the modulated magnetic field applied to the recording medium not less than 2 x 10⁵/4 π A/m (200 Oe) so as to realize sufficient recording state. The inventors have found that the floating magnetic field from the recording medium changes in proportion to a product of the thickness of an information recording film of the recording medium, that is, the thickness t of a magnetic thin film and the saturating magnetization Mₛ thereof.

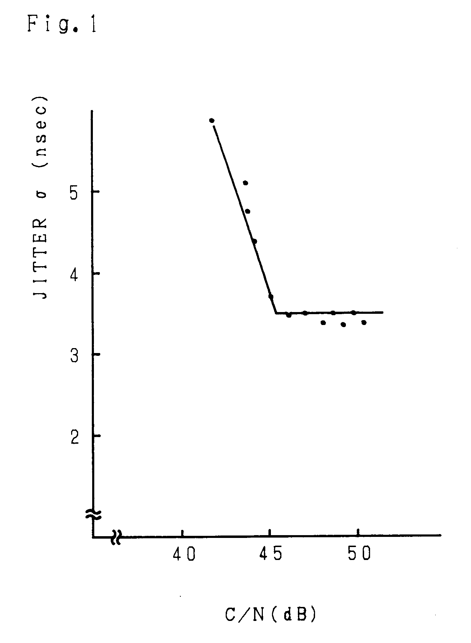

The relation between the jitter σ representing the time lag between a recording signal and a regenerating signal, and C/N (carrier to noise ratio) when information is recorded in the recording medium is as shown in a graph of Fig. 1. In Fig. 1, the vertical axis indicates the jitter σ (ns), while the horizontal axis indicates the C/N (dB). As is clear from Fig. 1, when the jitter σ is not less than 3.5 ns, the C/N becomes 45 dB or less, and therefore the information cannot be recorded in a satisfactory recording state.

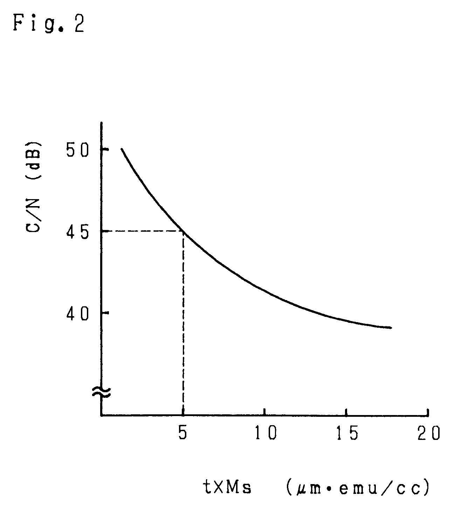

On the other hand, when the intensity of the modulated magnetic field applied to the recording medium is set 2 x 10⁵/4 π A/m (200 Oe), the relation between the C/N and a multiplication of the film thickness t with the saturating magnetization Mₛ is obtained, the result of which is as shown in Fig. 2 wherein the vertical axis represents C/N (dB) and the horizontal axis represents t × Mₛ 4 π x 10⁻⁴ µm · Wb/m² (µm·emu/cc). The graph in Fig. 2 makes it clear that the C/N is higher as the multiplied value t × Mₛ declines. When the multiplied value between the film thickness t and the saturating magnetization Mₛ becomes not more than 5 20 π x 10⁻⁴ µm · Wb/m² (µm·emu/cc), the C/N becomes 45 dB or more. In contrast, when the multiplied value is not less than 20 π x 10⁻⁴ µm · Wb/m² (5 µm· emu/cc), the C/N is reduced to be 45 dB or less, and therefore the information cannot be recorded in a satisfactory recording state as mentioned earlier. In other words, in order to record the information in a satisfactory state into the recording medium, the multiplied value of the film thickness t (µm) of the magnetic thin film in the recording medium with the saturating magnetization Mₛ (emu/cc) should be less than 20 π x 10⁻⁴ µm · Wb/m² (5 µm·emu/cc).

As is described above, if an inequality t × Mₛ < 5 is established, when the information is recorded with the intensity 2 x 10⁵/4 π A/m (200 Oe) of the modulated magnetic field applied to the recording medium, the C/N is not less than 45 dB, and the jitter σ becomes not more than 4 ns. Accordingly, the magneto-optical recording medium of the present invention is described by the features of claim 1.

It is hence a primary object of the present invention to provide a magneto-optical recording medium in which information can be overwritten even in the use of the modulated magnetic field of small intensity (not more than 2 x 10⁵/4 π A/m (200 Oe)).

It is another object of the present invention to provide a magneto-optical recording medium having a small error rate in recording.

It is a still further object of the present invention to provide a magneto-optical recording medium which does not require to increase the intensity of the modulated magnetic field in recording information in a satisfactory recording state.

The above and further objects and features of the invention will more fully be apparent from the following detailed description with accompanying drawings.

### (Example 1)

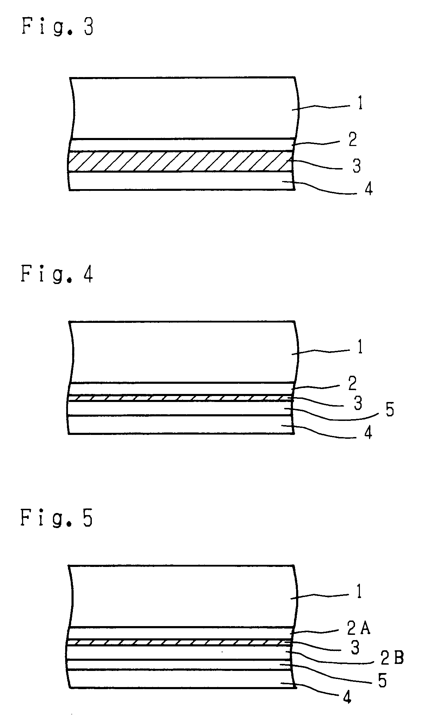

Fig. 3 is a schematic sectional view showing a recording medium according to a first embodiment of the present invention. In the recording medium of Fig. 3, on one surface of a substrate 1 which is a polycarbonate substrate or a 2P glass substrate is formed a dielectric film 2 made of SiN in 0.06 µm thickness, and on the dielectric film 2 is formed a magnetic thin film 3 made of TbFeCo having a film thickness t of 0.08 µm, with the saturating magnetization Mₛ of 240 π x 10⁻⁴ Wb/m² (60 emu/cc). On the magnetic thin film 3 is formed a protective film 4 made of SiN in 0.08 µm thickness. Each of these thin films 2, 3 and 4 is formed by sputtering method. The multiplied value of the film thickness t with the saturating magnetization Mₛ is 4.8 19,2 π x 10⁻⁴ Wb/m² (µm·emu/cc) according to this embodiment.

When the recording medium (S1) of the above-described structure is recorded with information on condition of a recording signal frequency F = 7.4 MHz, a rotating number of the recording medium N = 3600 r.p.m. and the intensity of the modulated magnetic field 2x 10⁵/4 π A/m (200 Oe), the C/N and jitter σ are found to be 46.0 dB and 3.58 ns, respectively. Moreover, other recording mediums (S2, S3) in the same structure as S1, but having a different film thickness t of the magnetic thin film 3 and a different saturating magnetization Mₛ are prepared to measure the C/N and jitter σ. The recording medium S2 having the film thickness t of 0.10 µm and saturating magnetization Mₛ of 200 π x 10⁻⁴ Wb/m² (50 emu/cc) shows the C/N of 45.0 dB and the jitter σ of 3.80 ns. The recording medium 33 having the film thickness t of 0.08 µm and saturating magnetization Mₛ of 120 π x 10⁻⁴ Wb/m² (30 emu/cc) shows the C/N of 48.0 dB and the jitter σ of 3.50 ns. The results of the experiments are shown in Table 1 below.

In the meantime, when conventional recording mediums SS1 and SS2 which have the same structure as the above recording mediums S1, S2 and S3, with the multiplied value of the film thickness t of the magnetic thin film 3 with the saturating magnetization Mₛ being 5 or more, are measured, the results are also shown in Table 1. In any of the conventional recording mediums, the C/N is not more than 45 dB and the jitter σ is not less than 5.0 ns.

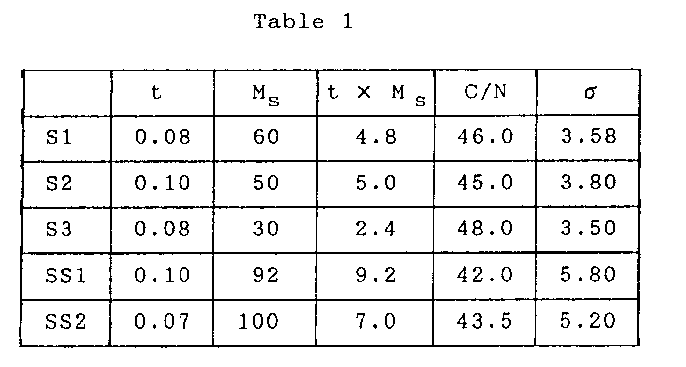

As is made clear from the foregoing experiments, since the multiplied value of the film thickness t of the magnetic thin film with the saturating magnetization Mₛ is restricted to be less than 20 x π x 10⁻⁴ µm · Wb/m² (5 µm · emu/cc) in the recording medium, the C/N becomes 45.0 dB or more and the jitter σ is not more than 4 ns even in the case where the intensity of the modulated magnetic field of the recording medium is 2 x 10⁵/4 π A/m (200 Oe). Accordingly, a recording medium with reduced error rate, in which information can be overwritten in small intensity of the modulated magnetic field even in a high-speed rotation thereof, can be obtained.

### (Example 2)

Fig. 4 is a schematic sectional view showing a recording medium according to a second embodiment of the present invention. A dielectric film 2 made of SiN is formed in 0.06 µm thickness on one surface of a substrate 1 which is a polycarbonate substrate or a 2P glass substrate, onto which film 2 is formed a magnetic thin film 3 made of TbFeCo in 0.03 µm thickness with 400 π x 10⁻⁴ Wb/m² (100 emu/cc) of the saturating magnetization Mₛ. Further, a reflecting film 5 made of AlNi is formed in 0.04 µm thickness on the magnetic thin film 3. Moreover, a protective film 4 is formed on the reflecting film 5, which is made of SiN in 0.08 µm thickness. The magnetic thin film 3 may be formed of DyFeCo, GdTbFe, GdTbFeCo, BiYIG or BiDy-Garnet film, instead of TbFeCo film.

Information are recorded onto the recording mediums (S4, S5) of the above structure under the same recording conditions as those for the recording mediums S1, S2 and S3, to measure the C/N and the jitter σ. A TbFeCo film is used for the magnetic thin film 3. A conventional recording medium SS3 of the multiplied value of 24 x π x 10⁻⁴ µm · Wb/m² (6 µm·emu/cc) is prepared for comparison of the C/N and the jitter σ with those of the recording mediums S4 and S5. The results of the measurement are tabulated in Table 2 below.

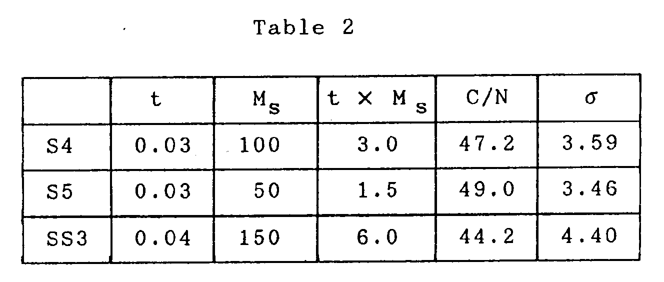

As is known from Table 2, even in the case where the magnetic thin film 3 is made of TbFeCo in 0.03 µm thickness approximately 1/3 of the film thickness t of the recording mediums S1, S2 and S3, the recording mediums S4 and S5 having the multiplied value of the film thickness t with the saturating magnetization Mₛ of less than 20 x π x 10⁻⁴ µm · Wb/m² (5 µm·emu/cc) represent the C/N exceeding 45 dB and the jitter a not more than 4.0 ns. Meanwhile, the conventional recording medium SS3 having the multiplied value of 24 x π x 10⁻⁴ µm · Wb/m² (6 µm·emu/cc) shows the C/N of 44.2 dB and the jitter σ of 4.4 ns. Therefore, according to this embodiment, even when the magnetic thin film 3 is thin, if the multiplied value of the film thickness t with the saturating magnetization Mₛ is made less than 20 x π x 10⁻⁴ µm · Wb/m² (5 µm·emu/cc), a recording medium with reduced error rate, in which information can be overwritten in a small intensity of the modulated magnetic field even in a high-speed rotation thereof, can be obtained.

### (Example 3)

Referring to Fig. 5 schematically showing a section of a recording medium according to a third embodiment of the present invention, a first dielectric film 2A made of SiN in 0.06 µm thickness is formed on one surface of a substrate 1 which is similar to the substrate in the Examples 1 and 2 described earlier. On the first dielectric thin film 2A is formed a magnetic thin film 3 made of, for example, TbFeCo, with the film thickness t of 0.03 µm and the saturating magnetization Mₛ of 200 π x 10⁻⁴ Wb/m² (50 emu/cc). A second dielectric film 2B is formed on the magnetic thin film 3. The second dielectric film 2B is made of SiN and having the film thickness of 0.06 µm. A reflecting film 5 made of AlNi is formed in 0.04 µm thickness on the second dielectric film 2B. Furthermore, on the reflecting film 5 is formed a protective film 4 made of SiN in 0.08 µm thickness.

Information are recorded onto the recording mediums (S6, S7 and S8) of the above structure under the same recording conditions as in the Examples 1 and 2. Then, the C/N and the jitter a are measured. A conventional recording medium SS4 is also prepared in the same structure as the recording mediums S6, S7 and S8, with the multiplied value 25,6 π x 10⁻⁴ Wb/m² (6.4 µm·emu/cc), to measure the C/N and the jitter σ. The results of the measurements are indicated in Table 3 below.

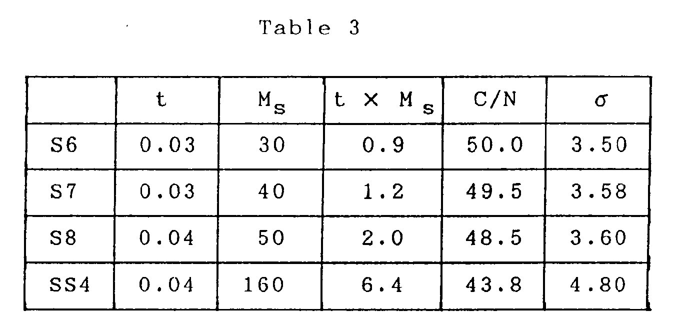

Although the magnetic thin film 3 is as thin as 0.03 or 0.04 µm and the dielectric film 2B is interposed between the magnetic thin film 3 and the reflecting film 5 in the recording mediums S6, S7 and S8, since the multiplied value of the film thickness t with the saturating magnetization Mₛ is set less than 20 π x 10⁻⁴ Wb/m² (5 µm·emu/cc), all of the recording mediums S6, S7 and S8 show the C/N not less than 45 dB and the jitter σ not more than 4.0 ns. On the contrary, the conventional recording medium SS4 having the same structure as the recording mediums S6, S7 and S8, but the different multiplied value of 25,6 π x 10⁻⁴ Wb/m² (6.4 µm·emu/cc) shows the C/N not more than 45 dB and the jitter σ not less than 4 ns. Accordingly, as is clear from the above results of the measurements, even in the recording medium having the dielectric film 2B interposed between the magnetic thin film 3 and the reflecting film 5, a recording medium with reduced error rate, in which information can be overwritten in a small intensity of the modulated magnetic field even in a high-speed rotation thereof, can be obtained. It is to be noted here that the recording medium with the dielectric film 2B interposed between the magnetic thin film 3 and the reflecting film 5 increases a Kerr rotational angle ϑₖ.

## Claims

1. A magneto-optical recording medium equipped with a magnetic thin film (3) for recording information thereon, characterized in that said magnetic thin film (3) satisfies the following inequality;${\text{t × M}}_{\text{s}} \text{< 20 π x 10⁻⁴ µm · Wb/m² (5 µm · emu/cc)}$ wherein t (µm) is the film thickness and Mₛ 4 π x 10⁻⁴ Wb/m² (emu/cc) is the saturating magnetization of said magnetic thin film (3) except the values for (t, Mₛ) being (0.01, 100), (0.01, 70), (0.01, 60), (0.01, 50) and (0.1, 30).

2. A magneto-optical recording medium as set forth in Claim 1, wherein said magnetic thin film (3) has magnetic anisotropy in a thickness direction thereof.

3. A magneto-optical recording medium as set forth in Claim 1, wherein said magnetic thin film (3) is selected from a group composed of TbFeCo film, DyFeCo film, GdTbFe film, GdTbFeCo film, BiYIG film and BiDy-Garnet film.

4. A magneto-optical recording medium as set forth in Claim 1, wherein a C/N (carrier to noise ratio) is not less than 45 dB.

5. A magneto-optical recording medium as set forth in Claim 1, wherein a jitter σ is not more than 4 ns.

6. A magneto-optical recording medium as set forth in Claim 1, further comprising a substrate (1) on which said magnetic thin film (3) is formed.

7. A magneto-optical recording medium as set forth in Claim 6, wherein said substrate (1) is a polycarbonate substrate or 2P glass substrate.

8. A magneto-optical recording medium according to claim 6 comprising:
a substrate (1);
a dielectric film (2), formed on said substrate (1);
a magnetic thin film (3) laminated on said dielectric film (2),
a protective film (4), laminated on said magnetic thin film (3).

9. A magneto-optical recording medium according to claim 8 comprising:
a reflecting film (5) laminated on said magnetic thin film (3); and
a protective film (4) laminated on said reflecting film (5).

10. A magneto-optical recording medium according to claim 8 comprising:
a first dielectric film (2A) formed on said substrate (1);
a magnetic thin film (3), laminated on said first dielectric film (2A),
a second dielectric film (2B) laminated on said magnetic thin film;
a reflecting film (5) laminated on said second dielectric film (2B); and
a protective film (4) laminated on said reflecting film (5).

11. A magneto-optical recording medium as set forth in Claims 9 to 10, wherein said magnetic thin film (3) is a TbFeCo film.

12. A magneto-optical recording medium as set forth in Claim 8, wherein said dielectric film (2) and said protective film (4) are respectively a SiN film.

13. A magneto-optical recording medium as set forth in Claim 9, wherein said dielectric film (2) and said protective film (4) are respectively a SiN film, and said reflecting film is an AlNi film.

14. A magneto-optical recording medium as set forth in Claim 10, wherein each of said first, second dielectric films (2,2A,2B) and said protective film (4) are respectively a SiN film, and said reflecting film (5) is an AlNi film.

## Patentansprüche

1. Magnetisch-optisches Aufzeichnungsmaterial, das mit einem magnetischen Dünnfilm (3) zur Aufzeichnung von Information darauf versehen ist, dadurch gekennzeichnet, daß der magnetische Dünnfilm (3) der folgenden Ungleichung${\text{t x M}}_{\text{s}} \text{< 20 π x 10⁻⁴ µm x Wb/m² (5 µm · emu/cm³)}$ genügt, worin t (µm) die Filmdicke ist und Mₛ [4 π x 10⁻⁴ Wb/m²] (emu/cm³) die Sättigungsmagnetisierung des magnetischen Dünnfilms ist, mit Ausnahme der Werte für (t, Mₛ) von (0,01, 100), (0,01, 70), (0,01, 60), (0,01, 50) und (0,1, 30).

2. Magnetisch-optisches Aufzeichnungsmaterial gemäß Anspruch 1, worin der magnetische Dünnfilm (3) magnetische Anisotropie in einer Dickenrichtung aufweist.

3. Magnetisch-optisches Aufzeichnungsmaterial gemäß Anspruch 1, worin der magnetische Dünnfilm (3) aus einer Gruppe ausgewählt ist, bestehend aus TbFeCo-Film, DyFeCo-Film, GdTbFe-Film, GdTbFeCo-Film, BiYIG-Film und BiDy-Granat-Film.

4. Magnetisch-optisches Aufzeichnungsmaterial gemäß Anspruch 1, worin ein C/N (Träger zu Rausch-Verhältnis) nicht kleiner als 45 dB ist.

5. Magnetisch-optisches Aufzeichnungsmaterial gemäß Anspruch 1, worin eine unregelmäßige Signalschwankung (Zittern) σ nicht größer als 4 ns ist.

6. Magnetisch-optisches Aufzeichnungsmaterial gemäß Anspruch 1, das weiterhin ein Substrat (1) umfaßt, auf welchem der magnetische Dünnfilm (3) gebildet wird.

7. Magnetisch-optisches Aufzeichnungsmaterial gemäß Anspruch 6, worin das Substrat (1) ein Polycarbonat-Substrat oder 2P-Glassubstrat ist.

8. Magnetisch-optisches Aufzeichnungsmaterial gemäß Anspruch 6 umfassend:
ein Substrat (1),
einen dielektrischen Film (2), der auf dem Substrat (1) gebildet wird,
einen magnetischen Dünnfilm (3), der auf den dielektrischen Film (2) laminiert ist,
und einen Schutzfilm (4), der auf den magnetischen Dünnfilm (3) laminiert ist.

9. Magnetisch-optisches Aufzeichnungsmaterial gemäß Anspruch 8 umfassend:
einen reflektierenden Film (5), der auf den magnetischen Dünnfilm (3) laminiert ist,
und einen Schutzfilm (4), der auf dem reflektierenden Film (5) laminiert ist.

10. Magnetisch-optisches Aufzeichnungsmaterial gemäß Anspruch 8 umfassend:
einen ersten dielektrischen Film (2A), der auf dem Substrat (1) gebildet wird,
einen magnetischen Dünnfilm (3), der auf dem ersten dielektrischen Film (2A) laminiert ist,
einen zweiten dielektrischen Film (2B), der auf dem magnetischen Dünnfilm laminiert ist,
einen reflektierenden Film (5), der auf dem zweiten dielektrischen Film (2B) laminiert ist,
und einen Schutzfilm (4), der auf dem reflektierenden Film (5) laminiert ist.

11. Magnetisch-optisches Aufzeichnungsmaterial gemäß den Ansprüchen 9 bis 10, worin der magnetischen Dünnfilm (3) ein TbFeCo-Film ist.

12. Magnetisch-optisches Aufzeichnungsmaterial gemäß Anspruch 8, worin der dielektrische Film (2) und der Schutzfilm (4) jeweils ein SiN-Film sind.

13. Magnetisch-optisches Aufzeichnungsmaterial gemäß Anspruch 9, worin der dielektrische Film (2) und der Schutzfilm (4) jeweils ein SiN-Film sind und der reflektierende Film ein AlNi-Film ist.

14. Magnetisch-optisches Aufzeichnungsmaterial gemäß Anspruch 10, worin jeder der ersten und zweiten dielektrischen Filme (2, 2A, 2B) und der Schutzfilm (4) jeweils ein SiN-Film sind und der reflektierende Film (5) ein AlNi-Film ist.

## Revendications

1. Support d'enregistrement magnéto-optique équipé d'une couche magnétique mince (3) pour enregistrer les informations dessus, caractérisé en ce que ladite couche magnétique mince (3) satisfait l'inégalité suivante :${\text{t x M}}_{\text{s}} \text{< 20 π x 10⁻⁴ µm·Wb/m² (5 µm.emu/cc)}$ dans laquelle t (µm) est l'épaisseur de la couche et Mₛ 4 π x 10⁻⁴ Wb/m² (emu/cc) est l'aimantation de saturation de ladite couche magnétique mince (3) excepté les valeurs pour (t, Mₛ) étant (0.01, 100), (0.01, 70), (0.01, 60), (0.01, 50) et (0.1, 30).

2. Support d'enregistrement magnéto-optique selon la revendication 1, dans lequel ladite couche magnétique mince (3) a une anisotropie magnétique dans le sens de son épaisseur.

3. Support d'enregistrement magnéto-optique selon la revendication 1, dans lequel ladite couche magnétique mince (3) est sélectionnée dans un groupe composé d'une couche de TbFeCo, d'une couche de DyFeCo, d'une couche de GdTbFe, d'une couche de GdTbFeCO, d'une couche de BiYIG et d'une couche de BiDy-Garnet.

4. Support d'enregistrement magnéto-optique selon la revendication 1, dans lequel un C/N (rapport porteuse et bruit) n'est pas inférieur à 45 dB.

5. Support d'enregistrement magnéto-optique selon la revendication 1, dans lequel un sautillement σ ne dépasse pas 4 ns.

6. Support d'enregistrement magnéto-optique selon la revendication 1, comprenant de plus un substrat (1) sur lequel ladite couche magnétique mince (3) est formée.

7. Support d'enregistrement magnéto-optique selon la revendication 6, dans lequel ledit substrat (1) est un substrat en polycarbonate ou un substrat en verre 2P.

8. Support d'enregistrement magnéto-optique selon la revendication 6, comprenant :
un substrat (1) ;
une couche diélectrique (2) formée sur ledit substrat (1) ;
une couche magnétique mince (3), stratifiée sur ladite couche diélectrique (2) ;
un film de protection (4), stratifié sur ladite couche magnétique mince (3).

9. Support d'enregistrement magnéto-optique selon la revendication 8, comprenant :
une première couche diélectrique (2A) formée sur ledit substrat (1) ;
Une couche magnétique mince (3), stratifiée sur ladite première couche diélectrique (2A) ;
une couche réflectrice (5), stratifiée sur ladite couche magnétique mince (3) ;
et
un film de protection (4) stratifié sur ladite couche réflectrice (5).

10. Support d'enregistrement magnéto-optique selon la revendication 8, comprenant :
une première couche diélectrique (2A) formée sur ledit substrat (1) ;
Une couche magnétique mince (3), stratifiée sur ladite première couche diélectrique (2A) ;
une deuxième couche diélectrique (2B) stratifiée sur ladite couche magnétique mince ;
une couche réflectrice (5), stratifiée sur ladite seconde couche diélectrique (2B) ;
et
un film de protection (4) stratifié sur ladite couche réflectrice (5).

11. Support d'enregistrement magnéto-optique selon les revendications 9 à 10, dans lequel ladite couche magnétique mince (3) est une couche de TbFeCo.

12. Support d'enregistrement magnéto-optique selon la revendication 8, dans lequel ladite couche diélectrique (2) et ledit film de protection (4) sont respectivement une couche de SiN.

13. Support d'enregistrement magnéto-optique selon la revendication 9, dans lequel ladite couche diélectrique (2) et ledit film de protection (4) sont respectivement une couche de SiN, et ladite couche réflectrice est une couche de AlNi.

14. Support d'enregistrement magnéto-optique selon la revendication 10, dans lequel chacune des dites première, seconde couches diélectriques (2, 2A, 2B) et ledit film de protection (4) sont respectivement une couche de SiN, et ladite couche réflectrice (5) est une couche de AlNi.
